# EUROPÄISCHE PATENTSCHRIFT

(11) **EP 2 920 012 B1**
(45) Veröffentlichungstag und Bekanntmachung des Hinweises auf die Patenterteilung: **22.11.2017**
(21) Anmeldenummer: 13779176.0
(22) Anmeldetag: 10.10.2013
(51) Int. Cl.: B60K 6/365, B60K 6/387, B60K 6/48, B60W 10/02, B60W 10/06, B60W 10/08, B60W 10/113, B60W 20/00, F16H 3/00, F16H 3/72

(54) **VERFAHREN ZUM BETREIBEN EINER ANTRIEBSEINHEIT FÜR EIN HYBRIDFAHRZEUG**
METHOD FOR OPERATING A DRIVE UNIT FOR A HYBRID VEHICLE
PROCÉDÉ PERMETTANT DE FAIRE FONCTIONNER UNE UNITÉ D'ENTRAINEMENT POUR UN VÉHICULE HYBRIDE

(30) Priorität: 15.11.2012 DE 102012220827
(43) Veröffentlichungstag der Anmeldung: 23.09.2015
(73) Patentinhaber: ZF Friedrichshafen AG, 88046 Friedrichshafen (DE)
(72) Erfinder: KALTENBACH, Johannes, 88048 Friedrichshafen (DE); GRIESMEIER, Uwe, 88677 Markdorf (DE)
(86) Internationale Anmeldenummer: PCT/EP2013/071174
(87) Internationale Veröffentlichungsnummer: WO 2014/075854

(56) Entgegenhaltungen:
- WO-A1-2013/122807
- DE-A1-102007 042 949
- DE-A1-102010 046 766
- DE-A1-102010 061 824

## Beschreibung

Die Erfindung betrifft ein Verfahren zum Betreiben einer Antriebseinheit für ein Hybridfahrzeug.

Aus der DE 10 2006 059 591 A1 ist eine Antriebseinheit für ein Hybridfahrzeug bekannt, deren Antriebsaggregat einen Verbrennungsmotor und eine elektrische Maschine umfasst, wobei zwischen das Antriebsaggregat und einen Abtrieb ein Getriebe geschaltet ist, welches mehrere Teilgetriebe mit formschlüssigen Schaltelementen aufweist. Die elektrische Maschine des Antriebsaggregats ist über ein Planetengetriebe an eine Eingangswelle eines ersten Teilgetriebes und eine Eingangswelle eines parallel zum ersten Teilgetriebes geschalteten zweiten Teilgetriebes gekoppelt. Der Verbrennungsmotor ist über eine Trennkupplung, die als reibschlüssige Trennkupplung ausgeführt ist, an die Eingangswelle des ersten Teilgetriebes koppelbar. Bei geschlossener Trennkupplung ist der Verbrennungsmotor an dasselbe Element des Planetengetriebes gekoppelt wie die Eingangswelle des ersten Teilgetriebes.

Aus der DE 10 2010 061 824 A1 ist eine weitere Antriebseinheit für ein Hybridfahrzeug bekannt, wobei sich die Antriebseinheit der DE 10 2010 061 824 A1 von der Antriebseinheit der DE 10 2006 059 591 A1 dadurch unterscheidet, dass zusätzlich ein Überbrückungsschaltelement mit dem Planetengetriebe zusammenwirkt. Bei dem Überbrückungsschaltelement handelt es sich um ein formschlüssiges Überbrückungsschaltelement, wobei bei geschlossenem Überbrückungsschaltelement eine drehfeste Verbindung zwischen der elektrischen Maschine und den Eingangswelle der beiden Teilgetriebe und damit zwingende Drehzahlgleichheit zwischen denselben besteht. Bei geöffnetem Überbrückungsschalteiement hingegen besteht diese drehfeste Verbindung zwischen der elektrischen Maschine und den beiden Eingangswellen der Teilgetriebe nicht.

Die Antriebseinheiten des Standes der Technik verfügen über den Nachteil, dass keine Lastschaltungen im rein elektrischen Fahrbetrieb des Hybridfahrzeugs möglich sind.

Aus der gattungsgemäßen DE 10 2007 042 949 A1 ist eine weitere Antriebseinheit für ein Hybridfahrzeug bekannt.

Hiervon ausgehend liegt der vorliegenden Erfindung die Aufgabe zu Grunde, neuartige Verfahren zum Betreiben einer Antriebseinheit für ein Hybridfahrzeug zu schaffen.

Ein erstes erfindungsgemäßes Verfahren zum Betreiben der Antriebseinheit für ein Hybridfahrzeug sieht nach Patentanspruch 1 vor, dass zur Ausführung einer Lastschaltung im rein elektrischen Fahrbetrieb der Antriebseinheit das reibschlüssige Überbrückungsschaltelement als Lastschaltelement verwendet wird, nämlich bei Ausführung einer Zug-Hoch-Schaltung und bei Ausführung einer Schub-Rück-Schaltung als zuschaltendes bzw. als zu schließendes Lastschaltelement und bei Ausführung einer Zug-Rück-Schaltung und bei Ausführung einer Schub-Hoch-Schaltung als abschaltendes bzw. als zu öffnendes Lastschaltelement. Dieses erste erfindungsgemäße Verfahren zum Betreiben der erfindungsgemäßen Antriebseinheit dient der Ausführung von Lastschaltungen im rein elektrischen Betrieb. Erfindungsgemäß wird das reibschlüssige Überbrückungsschaltelement, bei welchem es sich um kein Gangschaltelement handelt, als Lastschaltelement verwendet. Es ist demnach eine Erkenntnis der Erfindung, eine Lastschaltung im rein elektrischen Betrieb der Antriebseinheit mit Hilfe eines reibschlüssigen Überbrückungsschaltelements des Planetengetriebes auszuführen.

Ein zweites erfindungsgemäßes Verfahren zum Betreiben der Antriebseinheit für ein Hybridfahrzeug sieht nach Patentanspruch 4 vor, dass zum Ankoppeln des Verbrennungsmotors bei formschlüssiger Trennkupplung mit Hilfe des reibschlüssigen Überbrückungsschaltelements die Drehzahl der Eingangswelle des ersten Teilgetriebes auf die Drehzahl des Verbrennungsmotors unter Zugkrafterhalt am Abtrieb synchronisiert wird. Das zweite erfindungsgemäße Verfahren dient dem Ankoppeln des Verbrennungsmotors. Auch dann, wenn die Drehzahl des Verbrennungsmotors eigentlich zu hoch ist und nicht zu einem aktuellen Gang im zweiten Teilbetriebe passt, kann mit Hilfe des zweiten erfindungsgemäßen Verfahrens der Verbrennungsmotor trotz formschlüssiger Trennkupplung angekoppelt werden.

Bevorzugte Weiterbildungen ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein Schema einer ersten Antriebseinheit für ein Hybridfahrzeug;
- Fig. 2: das Schema der Fig. 1 zur Verdeutlichung eines rein elektrischen Fahrbetriebs;
- Fig. 3: das Schema der Fig. 1 zur Verdeutlichung einer rein elektrischen Zug-Hoch-Lastschaltung;
- Fig. 4: Diagramme zur weiteren Verdeutlichung der rein elektrischen Zug-Hoch-Lastschaltung;
- Fig. 5: Diagramme zur Verdeutlichung der rein elektrischen Zug-Rück-Lastschaltung;
- Fig. 6: das Schema der Fig. 1 zur Verdeutlichung eines Ankoppelns des Ver-brennungsmotors bei einer rein elektrischen Fahrt;
- Fig. 7: Diagramme zur weiteren Verdeutlichung des Ankoppelns des Ver-brennungsmotors bei einer rein elektrischen Fahrt;
- Fig. 8: ein Schema einer zweiten Antriebseinheit für ein Hybridfahrzeug;
- Fig. 9: das Schema der Fig. 8 zur Verdeutlichung eines rein elektrischen Fahrbetriebs;
- Fig. 10: das Schema der Fig. 8 zur Verdeutlichung einer rein elektrischen Zug-Hoch-Lastschaltung;
- Fig. 11: ein Schema einer dritten Antriebseinheit für ein Hybridfahrzeug;
- Fig. 12: das Schema der Fig. 11 zur Verdeutlichung eines rein elektrischen Fahrbetriebs;
- Fig. 13: das Schema der Fig. 11 zur Verdeutlichung einer rein elektrischen Zug-Hoch-Lastschaltung; und
- Fig. 14: ein Schema einer vierten Antriebseinheit für ein Hybridfahrzeug.

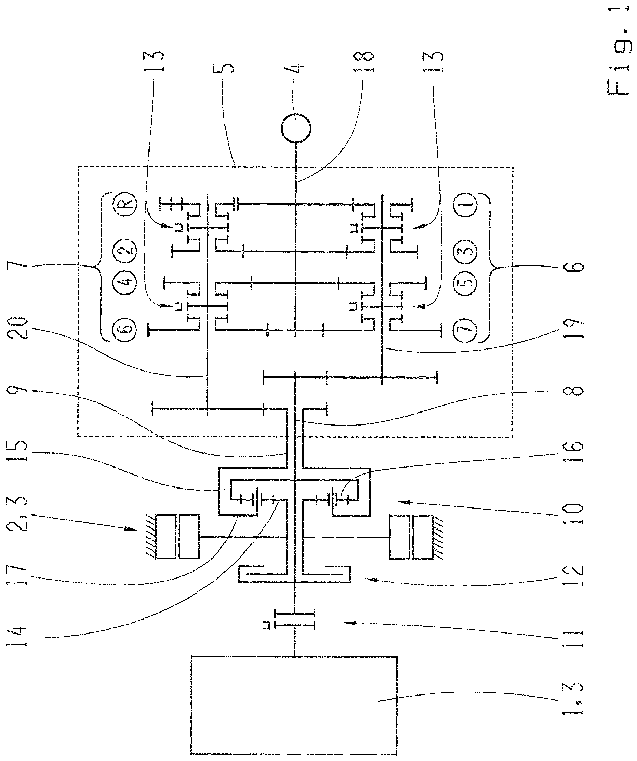

Fig. 1 zeigt ein Schema einer Antriebseinheit für ein Hybridfahrzeug. Die Antriebseinheit der Fig. 1 umfasst ein von einem Verbrennungsmotor 1 und einer elektrischen Maschine 2 gebildetes Antriebsaggregat 3, wobei zwischen das Antriebsaggregat 3 und einen Abtrieb 4 ein Getriebe 5 geschaltet ist.

Das Getriebe 5 umfasst zwei Teilgetriebe 6 und 7, die sozusagen parallel zueinander geschaltet sind, wobei das erste Teilgetriebe 6 im gezeigten Ausführungsbeispiel die Vorwärtsgänge "1", "3", "5" und "7" bereitstellt, wohingegen das zweite Teilgetriebe 7 die Vorwärtsgänge "2", "4", "6" sowie den Rückwärtsgang "R" bereitstellt. Der in Fig. 1 gezeigte Radsatz der Teilgetriebe 6 und 7 und die gezeigte Aufteilung der Gänge auf dieselben ist exemplarischer Natur.

Zur Bereitstellung der Vorwärtsgänge sowie des Rückwärtsgangs umfassen die Teilgetriebe 6 und 7 des Getriebes 5 formschlüssige Schaltelemente 13, welche die Gangschaltelemente des Getriebes 5 ausbilden. Der Aufbau und die Anordnung der Teilgetriebe 6 und 7 ist von Doppelkupplungsgetrieben bekannt und dem Fachmann geläufig.

Es sei lediglich darauf hingewiesen, dass jedes Teilgetriebe 6, 7 eine Eingangswelle 8, 9 umfasst, die abhängig vom Schaltzustand der Schaltelemente 13 selektiv über eine Ausgangswelle 18 mit dem Abtrieb 4 gekoppelt sind. Eine Eingangswelle 9 eines Teilgetriebes 7 ist als Hohlwelle ausgeführt, in welcher die andere Eingangswelle 8 des anderen Teilgetriebes 6 koaxial verläuft. Die Schaltelemente 13 der Teilgetriebe 6 und 7 sind Vorgelegewellen 19 und 20 der Teilgetriebe 6 und 7 zugeordnet.

Die elektrische Maschine 2 des Antriebsaggregats 3 greift an einer Eingangswelle 8 des ersten Teilgetriebes 6 und an einer Eingangswelle 9 des zweiten Teilgetriebes 7 über ein Planetengetriebe 10 an. An die Eingangswelle 8 des ersten Teilgetriebes 6 ist der Verbrennungsmotor 1 des Antriebsaggregats 3 über eine Trennkupplung 11 direkt koppelbar, wobei bei geschlossener Trennkupplung 11 der Verbrennungsmotor 1 über das Platengetriebe 10 ferner an die Eingangswelle 9 des zweiten Teilgetriebes 7 indirekt gekoppelt ist.

Vom Planetengetriebe 10 sind in Fig. 1 ein Sonnenrad 14, ein Hohlrad 15, Planetenräder 16 sowie ein Steg bzw. Planetenträger 17 gezeigt. Der Planetenträger 17 greift an der Eingangswelle 9 des zweiten Teilgetriebes 7 an. Die elektrische Maschine 2 des Antriebsaggregats 3 ist an das Sonnenrad 14 des Planetengetriebes 10 gekoppelt. Der Verbrennungsmotor 1 ist bei geschlossener Trennkupplung 11 ebenso wie die Eingangswelle 8 des ersten Teilgetriebes 6 an das Hohlrad 15 gekoppelt. Der Verbrennungsmotor 1 und die Eingangswelle 8 des ersten Teilgetriebes 6 greifen bei geschlossener Trennkupplung 11 immer an demselben Element des Planetengetriebes 10 an.

Mit dem Planetengetriebe 10 wirkt ein Überbrückungsschaltelement 12 derart zusammen, dass bei geschlossenem Überbrückungsschaltelement 12 eine drehfeste Verbindung zwischen der elektrischen Maschine 2, der Eingangswelle 9 des zweiten Teilgetriebes 7 und der Eingangswelle 8 des ersten Teilgetriebes 6 und damit zwingende Drehzahlgleichheit zwischen denselben besteht, wohingegen bei geöffnetem Überbrückungsschaltelement 12 diese drehfeste Verbindung zwischen der elektrischen Maschine 2 und den beiden Eingangswellen 8, 9 der beiden Teilgetriebe 6, 7 und damit die zwingende Drehzahlgleichheit nicht besteht.

Beim Überbrückungsschaltelement 12 handelt es sich um ein reibschlüssiges Überbrückungsschaltelement 12. Bei der Tennkupplung 11 handelt es sich nach der bevorzugten Ausführungsform der Erfindung um eine formschlüssige Tennkupplung 11.

Ein erstes erfindungsgemäßes Verfahren zum Betreiben einer solchen Antriebseinheit eines Hybridfahrzeugs betrifft die Ausführung einer Lastschaltung im rein elektrischen Fahrbetrieb der Antriebseinheit, wobei hierzu erfindungsgemäß das reibschlüssige Überbrückungsschaltelement 12 als Lastschaltelement verwendet wird.

Es ist eine Erkenntnis der Erfindung, dass dann, wenn sämtliche Gangschaltelemente des Getriebes 5, also sämtliche Schaltelemente 13, als formschlüssige Schaltelemente ausgeführt sind, im elektrischen Fahrbetrieb eine Lastschaltung über das reibschlüssige Überbrückungsschaltelement 12 des Planetengetriebes 10 ausgeführt werden kann.

Hierbei dient bei Ausführung einer Zug-Hoch-Schaltung oder bei Ausführung einer Schub-Rück-Schaltung das Überbrückungsschaltelement 12 als zu schaltendes bzw. zu schließendes Lastschaltelement. Bei Ausführung einer Zug-Rück-Lastschaltung oder einer Schub-Hoch-Lastschaltung dient das reibschlüssige Überbrückungsschaltelement 12 als abschaltendes bzw. als zu öffnendes Lastschaltelement.

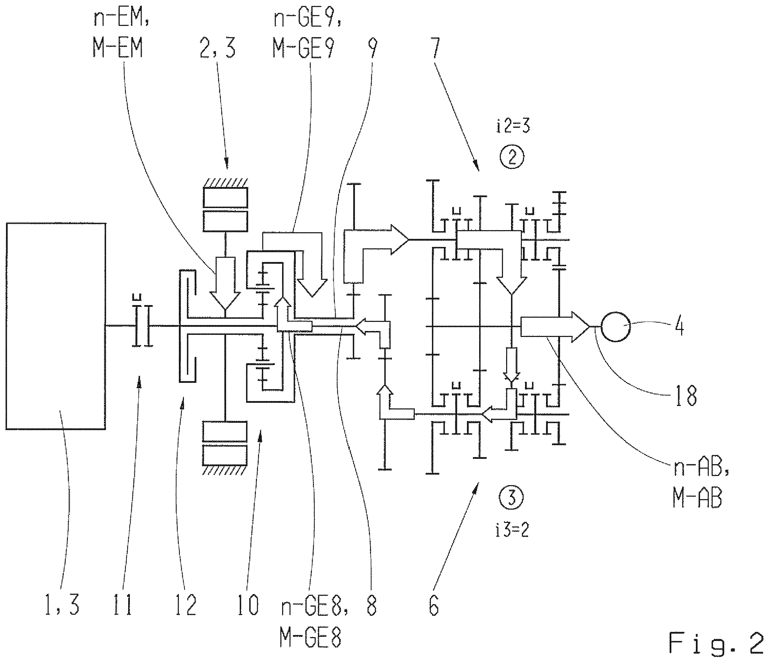

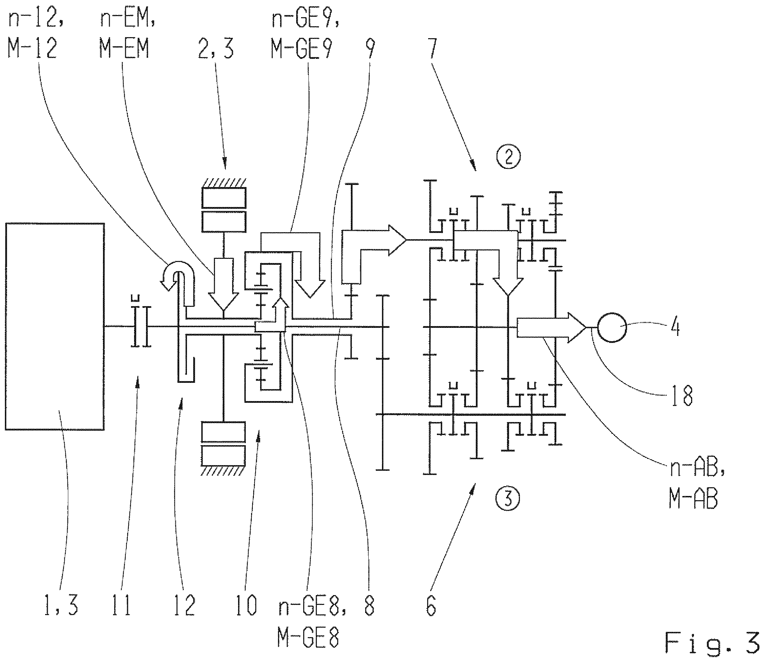

Fig. 3 verdeutlicht einen Momentenfluss durch die Antriebseinheit der Fig. 1 beim rein elektrischen Fahrbetrieb, wobei in Fig. 2 die formschlüssige Trennkupplung 11 und das reibschlüssige Überbrückungsschaltelement 12 beide geöffnet sind. Ferner ist in beiden Teilgetrieben 6, 7 ein Gang eingelegt, nämlich im ersten Teilgetriebe 6 der dritte Gang und im zweiten Teilgetriebe 7 der zweite Gang. Unter Annahme der in Fig. 2 gezeigten Verschaltung der elektrischen Maschine 2 sowie der beiden Eingangswellen 8 und 9 der beiden Teilgetriebe 6 und 7 mit den Elementen des Planetengetriebes 10 und unter weiterer Annahme einer Standgetriebeübersetzung i0 von -2.0, einer Übersetzung i2 des zweiten Gangs im zweiten Teilgetriebe 7 von 3.0 und einer Übersetzung i3 des dritten Gangs im ersten Teilgetriebe 6 von 2.0 ergibt sich für die Übersetzung der elektrischen Maschine 2 eine Übersetzung von 5.0, wobei die elektrische Maschine 2 1,67-mal schneller als die Eingangswelle 9 des zweiten Teilgetriebes 7 dreht. Hierbei fließt über das erste Teilgetriebe 6 und das Planetengetriebe 10 Blindleistung.

Gemäß Fig. 2 fließt von der elektrischen Maschine 2 und demnach über das Sonnenrad 14 des Planetengetriebes 10 Leistung von der elektrischen Maschine 2 über das zweite Teilgetriebe 7 zum Abtrieb 4. Ein Teil der Leistung der elektrischen Maschine 2 fließt jedoch von der Ausgangswelle 18 über das erste Teilgetriebe 6 wieder zurück zum Planetengetriebe 10, nämlich in das Hohlrad 15 desselben. Dieser Leistungsteil stellt die Blindleistung dar.

Fig. 2 verdeutlich für diesen Fall des elektrischen Verfahrens Drehzahlen und Drehmomente, wobei unter der Annahme, dass die elektrische Maschine 2 mit einer Drehzahl n-EM von 3500 Umdrehungen pro Minute (rpm) dreht und ein Moment M-EM von 100 Nm bereitstellt, an der Abtriebswelle 18 und demnach am Abtrieb 4 eine Drehzahl n-AB von 700 rpm und ein Drehmoment von 500 Nm anliegt. Die Drehzahl n-GE9 der Getriebeeingangswelle 9 des zweiten Teilgetriebes 7 beträgt in diesem Fall 2100 rpm und das von derselben zu übertragende Drehmoment M-G 9 beträgt in diesem Fall 300 Nm. Die Drehzahl n-GE8 der Eingangswelle 8 des ersten Teilgetriebes 6 beträgt in diesem Fall 1400 rpm und das von derselben übertragene Drehmoment M-GE8 beträgt 200 Nm.

Daraus folgt dass für diesen Fall des elektrischen Verfahrens die elektrische Maschine 2 eine Leistung von in etwa 35 kW bereitstellt, die auch am Abtrieb 4 anliegt, wobei die über das erste Teilgetriebe 6 fließende Blindleistung in etwa 28 kW beträgt.

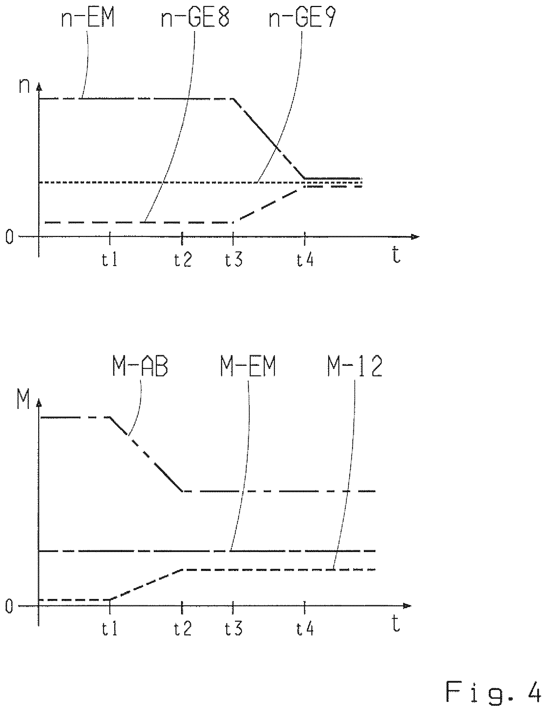

Soll nun bei einem rein elektrischen Fahrbetrieb eine Lastschaltung ausgeführt werden, so dient, wie bereits ausgeführt, das reibschlüssige Überbrückungsschaltelement 12 als Lastschaltelement, wobei Fig. 3 und 4 für den Fall einer Zug-Hoch-Schaltung im rein elektrischen Fahrbetrieb Drehzahlen n und Drehmomente M bei der Ausführung der Zug-Hoch-Lastschaltung visualisieren.

Im Ausgangszustand bei rein elektrischer Fahrt, also in Fig. 4 vor dem Zeitpunkt t1, sind das reibschlüssige Überbrückungsschaltelement 12 und die formschlüssige Trennkupplung 11 beide geöffnet, ferner ist in beiden Teilgetrieben 6, 7 jeweils ein Gang eingelegt, nämlich im gezeigten Ausführungsbeispiel im ersten Teilgetriebe 6 der dritte Gang und im zweiten Teilgetriebe 7 der zweite Gang.

Zur Ausführung der Zug-Hoch-Lastschaltung wird zunächst zwischen den Zeitpunkten t1 und t2 eine Lastübernahme durch das reibschlüssige Überbrückungsschaltelement 12 durchgeführt, nämlich zur Entlastung des ersten Teilgetriebes 6, wobei hierbei gemäß Fig. 4 das am Abtrieb wirksame Moment M-AB sinkt und das Moment M-12 des Überbrückungsschaltelements 12 angehoben wird. Das am Abtrieb wirksame Moment M-AB sinkt um einen Gangsprung.

Darauffolgend wird zwischen den Zeitpunkten t2 und t3 der Gang des ersten Teilgetriebes 6 ausgelegt, wobei darauffolgend zwischen den Zeitpunkten t3 und t4 eine Drehzahlanpassung erfolgt. Gemäß Fig. 4 wird b zwischen den Zeitpunkten t3 und t4 die Drehzahl n-EM der elektrischen Maschine 2 reduziert, wobei die Drehzahl n-GE8 der Eingangswelle 8 des ersten Teilgetriebes 6 ansteigt. Das reibschlüssige Überbrückungsschaltelement 12 wird bedingt durch diese Drehzahlanpassung synchronisiert und nachfolgend geschlossen. Zum Zeitpunkt t4 ist die Ausführung der Zug-Hoch-Lastschaltung abgeschlossen.

Unter der Annahme, dass die Drehzahl n-EM der elektrischen Maschine 2 3500 rpm und das von derselben bereitgestellte Moment M-EM 100 Nm beträgt, reduziert sich infolge der Ausführung der Zug-Hoch-Lastschaltung das am Abtrieb wirksame Moment M-AB von 500 Nm vor dem Zeitpunkt t1 auf 300 Nm nach dem Zeitpunkt t2 bei einer Drehzahl n-AB von 700 rpm. Das vom reibschlüssigen Überbrückungsschaltelement 12 zu übertragende Moment M-12 steigt beginnend mit dem Zeitpunkt t1 bis zum Zeitpunkt t2 auf 67 Nm bei einer Schlupfdrehzahl n-12 von 2100 rpm an. Die Verlustleistung am Überbrückungsschaltelement 12 beträgt dann 14 kW. Zwischen den Zeitpunkten t2 und t3 erfolgt die bereits erwähnte Drehzahlanpassung, wobei beginnend mit dem Zeitpunkt t3 die Drehzahl n-EM der elektrischen Maschine 2 von 3500 rpm bis zum Zeitpunkt t4 auf 2100 rpm, nämlich auf die Drehzahl n-GE9 der Eingangswelle 9 des zweiten Teilgetriebes 7, reduziert wird, wohingegen während des gleichen Zeitraums zwischen den Zeitpunkten t3 und t4 die Drehzahl n-GE8 der Eingangswelle 8 des ersten Teilgetriebes 6 von 700 rpm auf 2100 rpm erhöht wird.

Analog zu der obigen Ausführung der Zug-Hoch-Lastschaltungen kann auch eine Schub-Rück-Lastschaltung ausgeführt werden, nämlich dann, wenn sich die elektrische Maschine 2 zum Beispiel infolge Rekuperation im Schubbetrieb befindet.

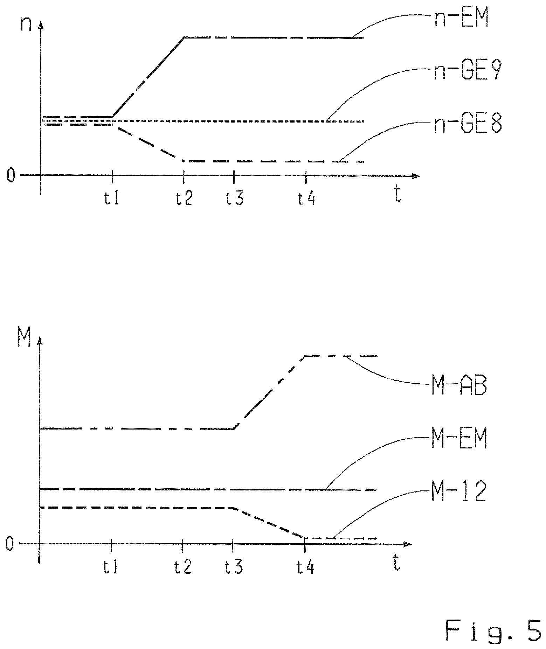

Fig. 5 verdeutlich Verläufe von Drehzahlen n und Drehmomenten M bei der Ausführung einer Zug-Rück-Schaltung im rein elektrischen Fahrbetrieb. Vor dem Zeitpunkt t1 im rein elektrischen Fahrbetrieb wird das reibschlüssige Überbrückungsschaltelement 12 geschlossen, die formschlüssige Trennkupplung 11 ist geöffnet, im zweiten Teilgetriebe 7 ist ein Gang eingelegt und das erste Teilgetriebe 6 befindet sich in Neutral. Zur Ausführung der Zug-Rück-Lastschaltung wird zunächst zwischen den Zeitpunkten t1 und t2 die Übertragungsfähigkeit des reibschlüssigen Überbrückungsschaltelements 12 abgesenkt, bis an demselben Schlupf auftritt. Im Diagramm der Fig. 5 ist das vom Überbrückungsschaltelement 12 tatsächlich übertragene Drehmoment M-12 dargestellt, daher ist diese Phase im Diagramm der Fig. 5 nicht sichtbar. Über eine ebenfalls zwischen den Zeitpunkten t1 und t2 erfolgende Drehzahlanpassung wird das erste Teilgetriebe 6 auf den Ziel-Gang der auszuführenden Zug-Rück-Lastschaltung synchronisiert, wobei hierzu gemäß Fig. 5 die Drehzahl n-EM der elektrischen Maschine 2 angehoben wird. Darauffolgend wird zwischen den Zeitpunkten t2 und t3 der Gang im ersten Teilgetriebe 6 eingelegt, wobei zwischen den Zeitpunkten t3 und t4 das reibschlüssige Überbrückungsschaltelement 12 geöffnet wird. Hierdurch steigt das am Abtrieb 4 wirksame Moment M-AB um den Gangsprung an. Mit dem Zeitpunkt t4 ist die Ausführung der Zug-Rück-Lastschaltung abgeschlossen.

Auf analoge Weise zur Zug-Rück-Lastschaltung kann auch eine Schub-Hoch-Lastschaltung ausgeführt werden, wobei sich dann zum Beispiel infolge eines Rekuperationsbetriebs die elektrische Maschine 2 wiederum im Schubbetrieb befindet.

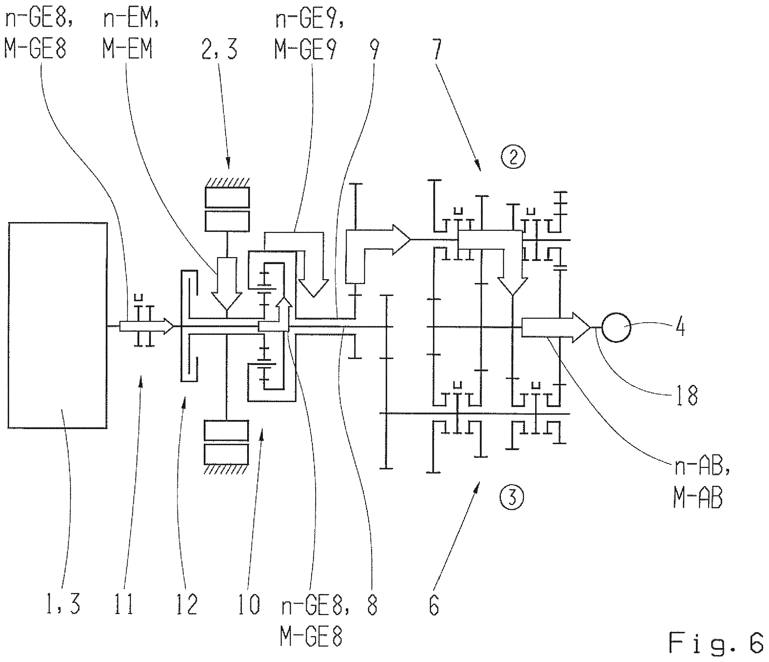

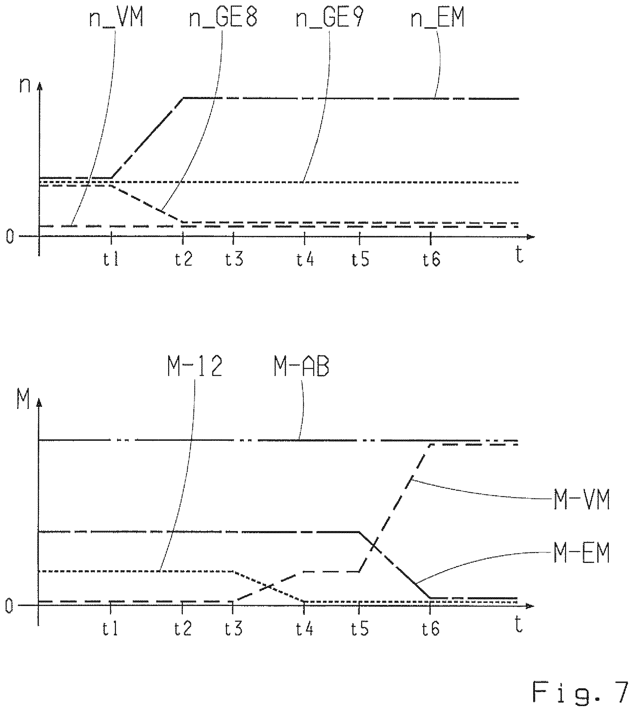

Ein weiteres erfindungsgemäßes Verfahren zum Betreiben der erfindungsgemäßen Antriebseinheit betrifft das Ankoppeln des Verbrennungsmotors 1 aus rein elektrischen Fahrtbetrieb heraus, wobei hierzu das Ankoppeln des Verbrennungsmotors 1 über die formschlüssige Trennkupplung 11 erfolgt, nämlich derart, dass mit Hilfe des reibschlüssigen Überbrückungsschaltelements 12 die Drehzahl der Eingangswelle 8 des ersten Teilgetriebes 6 auf die Drehzahl des Verbrennungsmotors 1 unter Aufrechterhaltung der Zugkraft am Abtrieb 4 synchronisiert wird. Details dieses Verfahrens zum Ankoppeln des Verbrennungsmotors 1 über die formschlüssige Trennkupplung 11 mit Hilfe des reibschlüssigen Überbrückungsschaltelements 12 werden nachfolgend unter Bezugnahme auf Fig. 6 und 7 beschrieben.

In Fig. 6 und 7 wird wiederum davon ausgegangen, dass bei rein elektrischer Fahrt vor dem Ankoppeln des Verbrennungsmotors 1, also in Fig. 7 vor dem Zeitpunkt t1, die Trennkupplung 11 geöffnet ist, das reibschlüssige Schaltelement 12 geschlossen ist, im zweiten Teilgetriebe 7 ein Gang eingelegt ist, nämlich der zweite Gang, wohingegen sich das erste Teilgetriebe 6 in Neutral befindet. Ferner wird angenommen, dass der im zweiten Teilgetriebe 7 aktuell eingelegte Gang für den Verbrennungsmotor 1 nicht passt, weil zum Beispiel die Drehzahl für den Verbrennungsmotor 1 zu hoch wäre.

Um nun den Verbrennungsmotor 1 anzukoppeln, wird zunächst zwischen den Zeitpunkten t1 und t2 die Übertragungsfähigkeit des reibschlüssigen Überbrückungsschaltelement 12 abgesenkt, bis an demselben Schlupf auftritt, dies ist in Fig. 7 jedoch nicht sichtbar, da in Fig. 7 das von dem reibschlüssigen Überbrückungsschaltelement 12 tatsächlich übertragene Drehmoment gezeigt ist. Ferner erfolgt zwischen den Zeitpunkten t1 und t2 eine Drehzahlanpassung, wobei Fig. 7 entnommen werden kann, dass die Drehzahl n-GE8 der Eingangswelle 8 des ersten Teilgetriebes 6 auf die Drehzahl n-VM des Verbrennungsmotors 1 gebracht wird, nämlich mit Hilfe der elektrischen Maschine 2, wobei hierzu die Drehzahl n-EM der elektrischen Maschine 2 angehoben wird.

Darauffolgend wird zwischen den Zeitpunkten t2 und t3 die formschlüssige Trennkupplung 11 geschlossen, wobei anschließend zwischen den Zeitpunkten t3 und t4 eine Lastübernahme durch den Verbrennungsmotor 1 erfolgt. Hierbei wird das reibschlüssige Überbrückungsschaltelement 12 entlastet, was dem Momentverlauf M 12 gemäß Fig. 7 des Überbrückungsschaltelements 12 entnommen werden kann. Darauffolgend wird zwischen den Zeitpunkten t4 und t5 eine Synchronisierung des ersten Teilgetriebes 6 auf einen passenden Gang durchgeführt, wobei im Zeitdiagramm der Fig. 7 der Gang des ersten Teilgetriebes 6 bereits synchron ist. Zwischen den Zeitpunkten t4 und t5 wird dann im ersten Teilgetriebe 6 der synchronisierte bzw. synchrone Gang eingelegt. Anschließend erfolgt zwischen den Zeitpunkten t5 und t6 eine Lastübernahme durch den Verbrennungsmotor 1, wobei dann die elektrische Maschine 2 entlastet wird. So zeigt Fig. 7, dass zwischen den Zeitpunkten t5 und t6 das vom Verbrennungsmotor 1 bereitgestellte Moment M-VM weiter ansteigt, wohingegen das von der elektrischen Maschine bereitgestellte Moment M-EM reduziert wird.

In den obigen Ausführungsbeispielen greift die Eingangselle 8 des ersten Teilgetriebes 6 ebenso wie der Verbrennungsmotor 1 bei geschlossener Trennkupplung 11 am Hohlrad 15 des Planetengetriebes 10 an. Die Eingangswelle 9 des zweiten Teilgetriebes 7 greift am Steg bzw. Planetenträger 17 des Planetengetriebes 10 an. Die elektrische Maschine 2 greift am Sonnenrad 14 des Planetengetriebes 10 an.

Die Anbindung von Verbrennungsmotor 1, elektrischer Maschine 2 und den beiden Teilgetrieben 6 und 7 am Planetengetriebe 10 kann auch abweichend ausgeführt sein. Der Verbrennungsmotor 1 und die Eingangswelle 8 des ersten Teilgetriebes 6 greifen jedoch immer an demselben Element des Planetengetriebes 10 an.

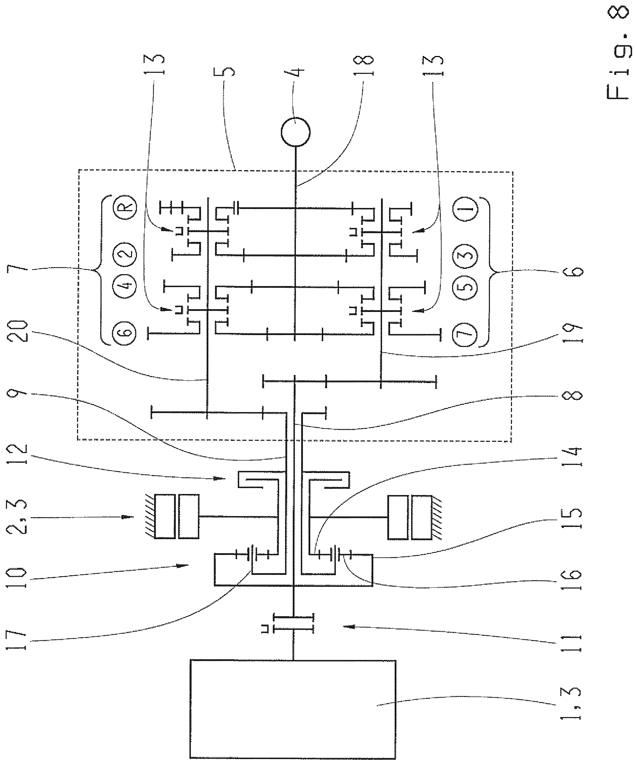

Fig. 8, 9 und 10 verdeutlichen eine Variante der Erfindung, in welcher das reibschlüssige Überbrückungsschaltelement 12 anders am Planetengetriebe 10 angreift. So ist in Fig. 8, 9 und 10 das reibschlüssige Überbrückungsschaltelement 12 zwischen dem Sonnenrad 14 und dem Steg bzw. Planetenträger 17 angeordnet.

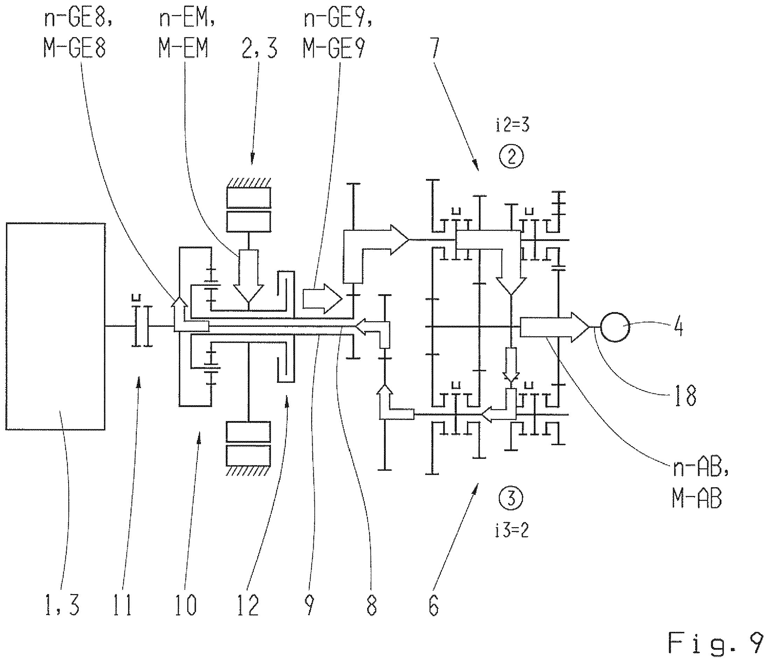

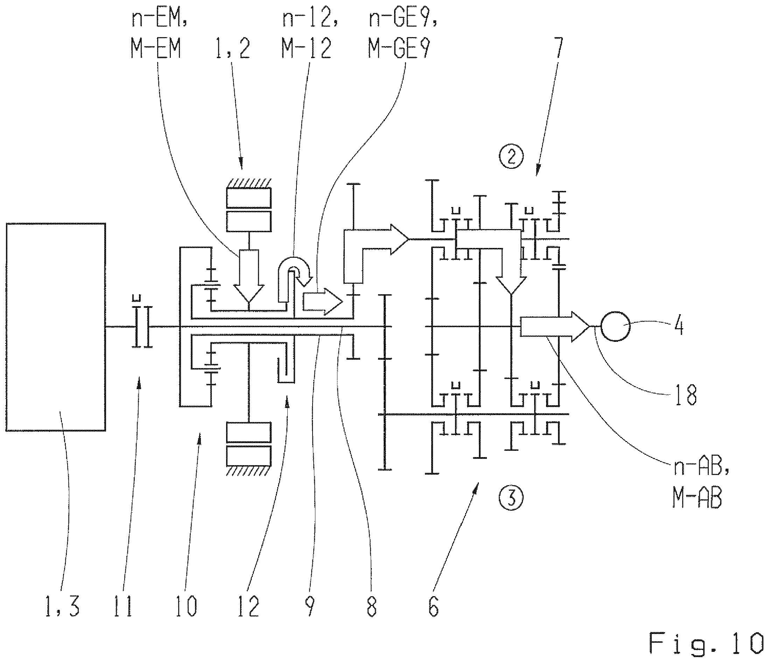

Fig. 9 verdeutlicht für diesen Fall den Leistungsfluss beim rein elektrischen Fahren also bei geöffneter Trennkupplung 11 mit Blindleistungsfluss über das erste Teilgetriebe 6, wohingegen Fig. 10 den Leistungsfluss bei Ausführung einer rein elektrischen Zug-Hoch-Lastschaltung visualisiert.

Unter der Annahme, dass bei der rein elektrischen Fahrt in Fig. 9 im ersten Teilgetriebe 6 der dritte Gang mit einer Übersetzung von i3=2.0 und im zweiten Teilgetriebe 7 der zweite Gang mit einer Übersetzung von i2=3.0 bei einer Standgetriebeübersetzung i=-2.0 eingelegt sind, und dass die elektrische Maschine 2 mit einer Drehzahl von 3500 rpm und einem Drehmoment von 100 Nm betrieben wird, stellt sich an der Eingangswelle 9 des zweiten Teilgetriebes 7 eine Drehzahl n-GE9 von 2100 rpm und ein Drehmoment M-GE9 von 300 Nm ein. An der Getriebeausgangswelle 18 stellt sich eine Drehzahl n-AB von 700 rpm und ein Moment M-AB von 500 Nm ein. Über das erste Teilgetriebe 6 fließt, wie bereits erwähnt, Blindleistung, wobei die Drehzahl n-GE8 der Eingangswelle 8 des ersten Teilgetriebes 6 1400 rpm beträgt und ein Moment M-GE8 von 200 Nm überträgt. Die Blindleistung beträgt dann 28 kW.

Bei der Ausführung der Zug-Hoch-Lastschaltung im rein elektrischen Fahrtbetrieb gemäß Fig. 10 beträgt die Drehzahl n-GE9 der Eingangswelle 9 des zweiten Teilgetriebes 7 wiederum 2100 rpm, von derselben wird ein Drehmoment M-GE9 von 100 Nm übertragen. Die Drehzahl n-AB am Abtrieb 4 beträgt wiederum 700 rpm, das Drehmoment M-AB am Abtrieb beträgt 300 Nm. Das vom reibschlüssigen Überbrückungsschaltelement 12 zu übertragende Moment M-12 steigt auf 100 Nm bei einer Schlupfdrehzahl n-12 von 1400 rpm an. Die Verlustleistung am Überbrückungsschaltelement 12 beträgt 14 kW.

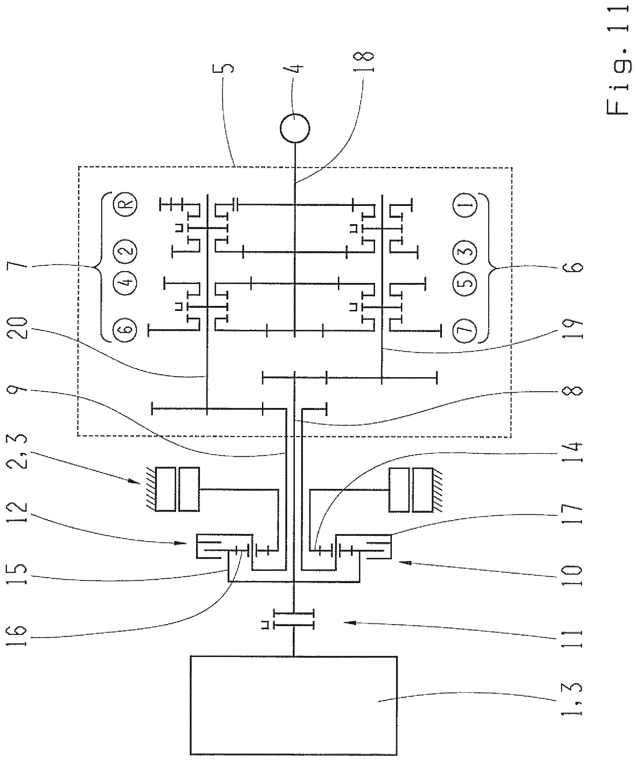

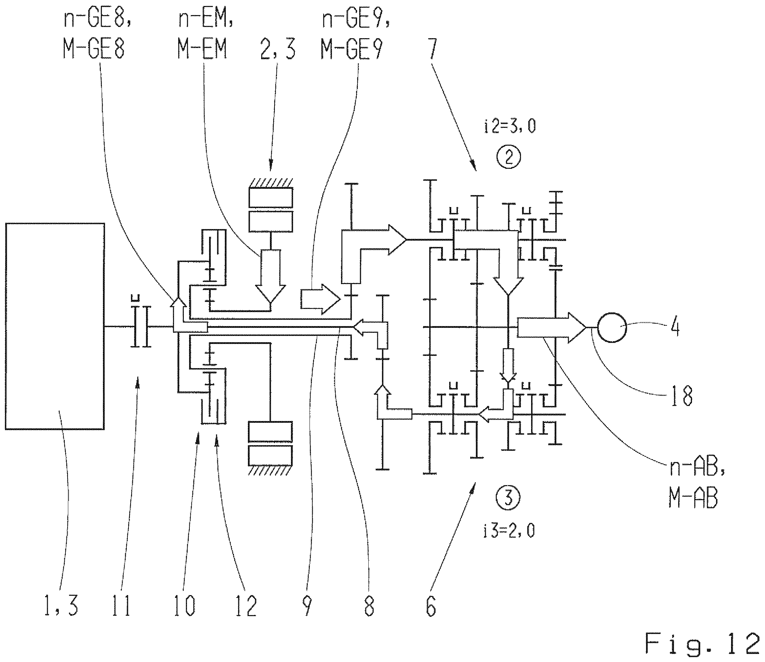

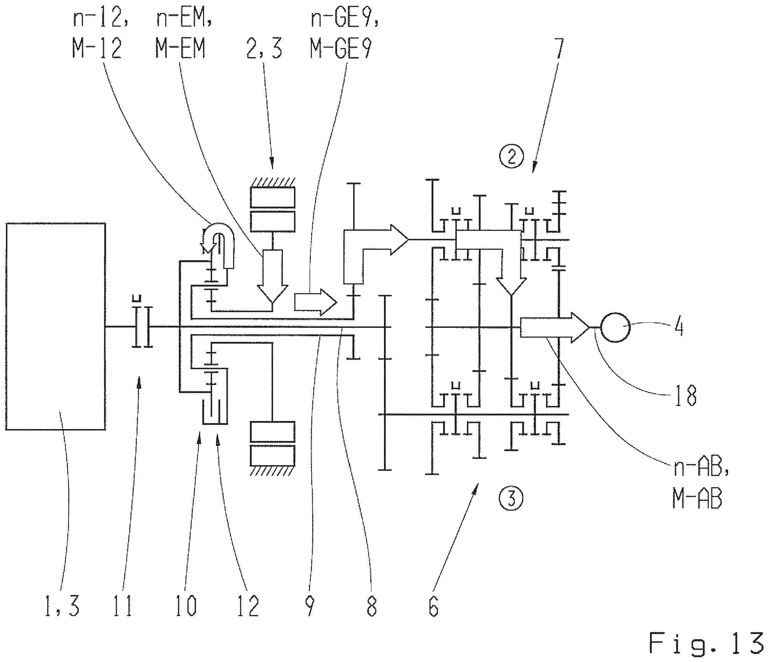

Eine weitere Variante der Erfindung zeigen Fig. 11, 12 und 13, wobei in Fig. 11, 12, 13 das reibschlüssige Überbrückungsschaltelement 12 wiederum auf andere Art und Weise am Planetengetriebe 10 angeordnet ist, nämlich zwischen dem Hohlrad 15 und dem Steg bzw. Planetenträger 17. Fig. 12 verdeutlicht für diesen Fall den Leistungsfluss während der rein elektrischen Fahrt, Fig. 13 verdeutlicht den Leistungsfluss bei der Ausführung einer Zug-Hoch-Lastschaltung im rein elektrischen Fahrbetrieb.

Unter der Annahme, dass bei der rein elektrischen Fahrt in Fig. 12 im ersten Teilgetriebe 6 der dritte Gang mit einer Übersetzung von i3=2.0 und im zweiten Teilgetriebe 7 der zweite Gang mit einer Übersetzung von i2=3.0 bei einer Standgetriebeübersetzung i=-2.0 eingelegt sind, und dass die elektrische Maschine 2 mit einer Drehzahl von 3500 rpm und einem Drehmoment von 100 Nm betrieben wird, stellt sich an der Eingangswelle 9 des zweiten Teilgetriebes 7 eine Drehzahl n-GE9 von 2100 rpm und ein Drehmoment M-GE9 von 300 Nm ein. An der Getriebeausgangswelle 18 stellt sich eine Drehzahl n-AB von 700 rpm und ein Moment M-AB von 500 Nm ein. Über das erste Teilgetriebe 6 fließt wiederum Blindleistung, wobei die Drehzahl n-GE8 der Eingangswelle 8 des ersten Teilgetriebes 6 1400 rpm beträgt und ein Moment M-GE8 von 200 Nm überträgt. Die Blindleistung beträgt dann 28 kW.

Bei der Ausführung der Zug-Hoch-Lastschaltung im rein elektrischen Fahrtbetrieb gemäß Fig. 10 beträgt die Drehzahl n-GE9 der Eingangswelle 9 des zweiten Teilgetriebes 7 wiederum 2100 rpm, von derselben wird ein Drehmoment M-GE9 von 100 Nm übertragen. Die Drehzahl n-AB am Abtrieb 4 beträgt wiederum 700 rpm, das Drehmoment M-AB am Abtrieb beträgt 300 Nm.

Das vom reibschlüssigen Überbrückungsschaltelement 12 zu übertragende Moment M-12 steigt auf 200 Nm bei einer Schlupfdrehzahl n-12 von 700 rpm an. Die Verlustleistung am Überbrückungsschaltelement 12 beträgt 14 kW.

Für die Antriebseinheiten der Fig. 8 bis 10 und 11 bis 13 bleiben die im Zusammenhang mit Fig. 1 bis 7 beschriebenen Verfahren unverändert. Es ergeben sich lediglich, wie oben geschildert, an dem reibschlüssigen Überbrückungsschaltelement 12 unterschiedliche Drehmomente und Differenzdrehzahlen.

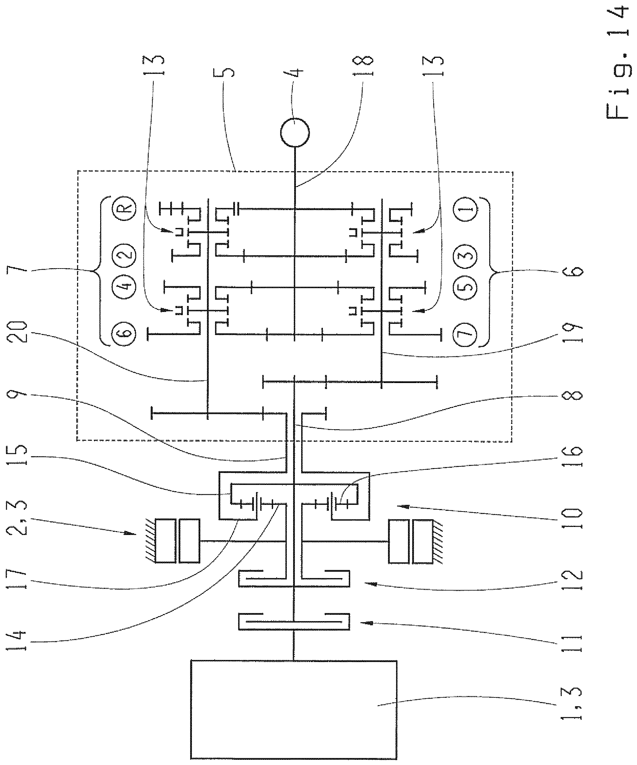

Obwohl die Ausgestaltung der Trennkupplung 11 als formschlüssige Trennkupplung bevorzugt ist, kann, wie Fig. 14 entnommen werden kann, die Trennkupplung 11 auch als reibschlüssige Trennkupplung ausgeführt sein. Die Verfahren bleiben unverändert. Die Verwendung einer formschlüssigen Trennkupplung 11 gemäß Fig. 1 bis 13 ist jedoch gegenüber der Verwendung einer formschlüssigen Trennkupplung 11 gemäß Fig. 14 bevorzugt, da der konstruktive Aufbau der Antriebseinheit vereinfacht werden kann.

Wie bereits ausgeführt, kann die Anbindung von Verbrennungsmotor 1, elektrischer Maschine 2 und zweitem Teilgetriebe 7 am Planetengetriebe 10 abweichen. So kann zum Beispiel in Fig. 1 die elektrische Maschine 2 am Hohlrad 15 und der Verbrennungsmotor 1 bei geschlossener Trennkupplung 11 ebenso wie die Eingangswelle 8 des ersten Teilgetriebes 6 am Sonnenrad 14 angreifen. Der Verbrennungsmotor 1 und die Eingangswelle 8 des ersten Teilgetriebes 6 greifen bei geschlossener Trennkupplung 11 immer an demselben Element des Planetengetriebes 10 an.

### Bezugszeichen

- 1: Verbrennungsmotor
- 2: elektrische Maschine
- 3: Antriebsaggregat
- 4: Abtrieb
- 5: Getriebe
- 6: Teilgetriebe
- 7: Teilgetriebe
- 8: Eingangswelle
- 9: Eingangswelle
- 10: Platengetriebe
- 11: Trennkupplung
- 12: Überbrückungsschaltelement
- 13: Schaltelement
- 14: Sonnerad
- 15: Hohlrad
- 16: Platenrad
- 17: Platenträger
- 18: Ausgangswelle
- 19: Vorgelegewelle
- 20: Vorgelegewelle

## Patentansprüche

1. Verfahren zum Betreiben einer Antriebseinheit für ein Hybridfahrzeug, wobei die Antriebseinheit ein Antriebsaggregat (3) mit einem Verbrennungsmotor (1) und einer elektrische Maschine (2) und ein zwischen das Antriebsaggregat (3) und einen Abtrieb (4) geschaltetes, mehrere Teilgetriebe (6, 7) aufweisendes Getriebe (5) umfasst, wobei die elektrische Maschine (2) über ein Planentengetriebe (10) an eine Eingangswelle (8) eines ersten Teilgetriebes (6) und eine Eingangswelle (9) eines parallel zum ersten Teilgetriebe (6) geschalteten zweiten Teilgetriebes (7) gekoppelt ist, wobei der Verbrennungsmotor (1) über eine Trennkupplung (11) an die Eingangswelle (8) des ersten Teilgetriebes (6) koppelbar und bei geschlossener Trennkupplung (11) zusammen mit der Eingangswelle (8) des ersten Teilgetriebes (6) an dasselbe Element des Planentengetriebes (10) gekoppelt ist, und wobei mit dem Planetengetriebe (10) ein Überbrückungsschaltelement (12) derart zusammenwirkt, dass bei geschlossenem Überbrückungsschaltelement (12) eine drehfeste Verbindung zwischen der elektrischen Maschine (2), der Eingangswelle (8) des ersten Teilgetriebes (6) und der Eingangswelle (9) des zweiten Teilgetriebes (7) und damit zwingende Drehzahlgleichheit zwischen denselben besteht, wohingegen bei geöffnetem Überbrückungsschaltelement (12) diese drehfeste Verbindung zwischen der elektrischen Maschine (2) und den beiden Eingangswellen (8, 9) der beiden Teilgetriebe (6, 7) und damit die zwingende Drehzahlgleichheit nicht besteht, wobei die Trennkupplung (11) als reibschlüssige oder formschlüssige Trennkupplung ausgebildet ist, und wobei das Überbrückungsschaltelement (12) als reibschlüssiges Überbrückungsschaltelement (12) ausgebildet ist, **dadurch gekennzeichnet, dass** zur Ausführung einer Lastschaltung im rein elektrischen Fahrbetrieb der Antriebseinheit das reibschlüssige Überbrückungsschaltelement (12) als Lastschaltelement verwendet wird, nämlich bei Ausführung einer Zug-Hoch-Schaltung und bei Ausführung einer Schub-Rück-Schaltung als zuschaltendes bzw, als zu schließendes Lastschaltelement und bei Ausführung einer Zug-Rück-Schaltung und bei Ausführung einer Schub-Hoch-Schaltung als abschaltendes bzw. als zu öffnendes Lastschaltelement.

2. Verfahren nach Anspruch 1, **dadurch gekennzeichnet, dass** zur Ausführung einer Zug-Hoch-Schaltung oder einer Schub-Rück-Schaltung im rein elektrischen Fahrbetrieb, dann, wenn das reibschlüssige Überbrückungsschaltelement (12) und die Trennkupplung (11) beide geöffnet sind, und wenn in beiden Teilgetrieben (6, 7) ein Gang eingelegt ist,
zunächst eine Lastübernahme durch das reibschlüssige Überbrückungsschaltelement (12) zur Entlastung des ersten Teilgetriebes (6) durchgeführt wird,
anschließend der Gang im ersten Teilgetriebe (6) ausgelegt wird, und
darauffolgend über eine Drehzahlanpassung die reibschlüssige Überbrückungsschaltelement (12) synchronisiert wird,
anschließend das reibschlüssige Überbrückungsschaltelement (12) geschlossen wird.

3. Verfahren nach Anspruch 1, **dadurch gekennzeichnet, dass** zur Ausführung einer Zug-Rück-Schaltung oder einer Schub-Hoch-Schaltung im rein elektrischen Fahrbetrieb, dann, wenn das reibschlüssige Überbrückungsschaltelement (12) geschlossen ist, wenn die Trennkupplung (11) geöffnet ist, wenn im zweiten Teilgetriebe (7) ein Gang eingelegt ist und wenn das erste Teilgetriebe (6) in Neutral ist,
zunächst die Übertragungsfähigkeit des reibschlüssigen Überbrückungsschaltelements (12) abgesenkt und dadurch dasselbe in Schlupf gebracht wird,
wobei ferner das erste Teilgetriebe (6) über eine Drehzahlanpassung an der elektrischen Maschine (2) auf den Ziel-Gang der auszuführenden Lastschaitung synchronisiert wird,
darauffolgend der Ziel-Gang im ersten Teilgetriebe (6) eingelegt wird, und anschließend das reibschlüssige Überbrückungsschaltelement (12) geöffnet wird.

4. Verfahren nach Anspruch 1, **dadurch gekennzeichnet, dass** zum Ankoppeln des Verbrennungsmotors (1) über eine formschlüssige Trennkupplung (11) mit Hilfe des reibschlüssigen Überbrückungsschaltelements (12) die Drehzahl der Eingangswelle (8) des ersten Teilgetriebes (6) auf die Drehzahl des Verbrennungsmotors (1) unter Zugkrafterhalt am Abtrieb (4) synchronisiert wird.

5. Verfahren nach Anspruch 4, **dadurch gekennzeichnet, dass** zum Ankoppeln des Verbrennungsmotors (1) im rein elektrischen Fahrbetrieb, dann, wenn das reibschlüssige Überbrückungsschaltelement (12) geschlossen ist, wenn die Trennkupplung (11) geöffnet ist, wenn im zweiten Teilgetriebe (7) ein Gang eingelegt ist und wenn das erste Teilgetriebe (6) in Neutral ist,
zunächst die Übertragungsfähigkeit des reibschlüssigen Überbrückungsschaltelements (12) abgesenkt und dadurch dasselbe in Schlupf gebracht wird;
wobei ferner durch eine Drehzahlanpassung an der elektrischen Maschine (2) die formschlüssige Trennkupplung (11) synchronisiert wird;
darauffolgend die formschlüssige Trennkupplung (11) geschlossen wird;
anschließend durch eine Lastübernahme des Verbrennungsmotors (1) das reibschlüssige Überbrückungsschaltelement (12) entlastet wird;
darauffolgend das erste Teilgetriebe (6) auf den passenden Gang synchronisiert und dieser Gang im ersten Teilgetriebe (6) eingelegt wird;
anschließend durch eine weitere Lastübernahme des Verbrennungsmotors (1) die elektrische Maschine (2) entlastet wird.

## Claims

1. Method for operating a drive unit for a hybrid vehicle, wherein the drive unit comprises a driver assembly (3) with internal combustion engine (1) and an electric machine (2), and comprises a transmission (5) having a plurality of partial transmissions (6, 7) which are connected between the driver assembly (3) and an output (4), wherein the electric machine (2) is coupled via a planetary gear mechanism (10) to an input shaft (8) of a first partial transmission (6) and to an input shaft (9) of a second partial transmission (7) which is connected in parallel with the first partial transmission (6), wherein the internal combustion engine (1) can be coupled to the input shaft (8) of the first partial transmission (6) via a clutch (11), and can be coupled to the same element of the planetary gear mechanism (10) together with the input shaft (8) of the first partial transmission (6) when the clutch (11) is closed, and wherein a lock-up shifting element (12) interacts with the planetary gear mechanism (10) in such a way that when the lock-up shifting element (12) is closed a rotationally fixed connection is present between the electric machine (2), the input shaft (8) of the first partial transmission (6) and the input shaft (9) of the second partial transmission (7) and therefore there is compulsory identity of rotational speed between them, whereas when the lock-up shifting element (12) is opened this rotationally fixed connection between the electric machine (2) and the two input shaft (8, 9) of the two partial transmissions (6, 7), and therefore the compulsory identity of rotational speed, is not present, wherein the clutch (11) is embodied as a frictionally locking or frictionally engaging clutch, and wherein the lock-up shifting element (12) is embodied as a frictionally locking lock-up shift element (12), **characterized in that** in order to execute a load shifting process in the purely electric travel mode of the drive unit the frictionally locking lock-up shifting element (12) is used as a load shifting element, specifically as an activating load shift element or as a load shift element to be closed when executing a traction upshift operation and when executing an overrun downshift operation, and as a deactivating load shift element or as a load shift element to be opened when executing a traction downshift operation and when executing an overrun upshift operation.

2. Method according to Claim 1, **characterized in that** in order to execute a traction upshift operation or an overrun downshift operation in the purely electric travel mode when the frictionally locking lock-up shift element (12) and the clutch (11) are both opened and when a gearspeed is engaged in both partial transmissions (6, 7),
firstly a transfer of load is carried out by the frictionally locking lock-up shift element (12) in order to relieve the first partial transmission (6), subsequently the gearspeed in the first partial transmission (6) is disengaged, and
after this the frictionally locking lock-up shift element (12) is synchronized by adaptation of the rotational speeds,
subsequently the frictionally locking lock-up shift element (12) is closed.

3. Method according to Claim 1, **characterized in that** in order to carry out a traction downshift operation or an overrun upshift operation in the purely electric travel mode when the frictional locking lock-up shift element (12) is closed when the clutch (11) is opened, when a gearspeed is engaged in the second partial transmission (7) and when the first partial transmission (6) is in neutral,
firstly the transmission capability of the frictionally locking lock-up shift element (12) is reduced and as a result said lock-up shift element (12) is placed in a slipping state,
wherein in addition the first partial transmission (6) is synchronized, by adapting the rotational speeds at the electric machine (2), with the target gearspeed of the load shift which is to be executed,
after this the target gearspeed in the first partial transmission (6) is engaged, and
subsequently the frictionally locking lock-up shift element (12) is opened.

4. Method according to Claim 1,
**characterized in that**, in order to couple the internal combustion engine (1) by means of a frictionally locking clutch (11) using the frictionally locking lock-up shift element (12), the rotational speed of the input shaft (8) of the first partial transmission (6) is synchronized with the rotational speed of the internal combustion engine (1) while maintaining the traction force at the output (4).

5. Method according to Claim 4, **characterized in that** in order to couple the internal combustion engine (1) in the purely electric travel mode when the frictionally locking lock-up shift element (12) is closed, when the clutch (11) is opened, when a gearspeed is engaged in the second partial transmission (7) and when the first partial transmission (6) is in neutral,
firstly the transmission capability of the frictionally locking lock-up shift element (12) is reduced and as a result said lock-up shift element (12) is placed in a slipping state;
wherein in addition the positively locking clutch (11) is synchronized by adapting rotational speeds at the electric machine (2);
after this the positively locking clutch (11) is closed;
subsequently the frictionally locking lock-up shift element (12) is relieved by transferring the load of the internal combustion engine (1);
subsequently the first partial transmission (6) is synchronized with the matching gearspeed, and this gearspeed is engaged in the first partial transmission (6); and
subsequently the electric machine (2) is relieved by further transfer of the load of the internal combustion engine (1).

## Revendications

1. Procédé permettant de faire fonctionner une unité d'entraînement pour un véhicule hybride, dans lequel l'unité d'entraînement comprend un ensemble d'entraînement (3) avec un moteur à combustion interne (1) et une machine électrique (2) et une boîte de vitesses (5) présentant plusieurs boîtes de vitesses partielles (6, 7) et montée entre l'ensemble d'entraînement (3) et une sortie (4), dans lequel la machine électrique (2) est couplée par un engrenage planétaire (10) à un arbre d'entrée (8) d'une première boîte de vitesses partielle (6) et à un arbre d'entrée (9) d'une deuxième boîte de vitesses partielle (7) montée parallèlement à la première boîte de vitesses partielle (6), dans lequel le moteur à combustion interne (1) peut être couplé par un embrayage de séparation (11) à l'arbre d'entrée (8) de la première boîte de vitesses partielle (6) et, lorsque l'embrayage de séparation (11) est fermé, est couplé en même temps que l'arbre d'entrée (8) de la première boîte de vitesses partielle (6) au même élément de l'engrenage planétaire (10), et dans lequel un élément de commutation de pontage (12) coopère avec l'engrenage planétaire (10) de telle manière que, lorsque l'élément de commutation de pontage (12) est fermé, il existe une liaison solidaire en rotation entre la machine électrique (2), l'arbre d'entrée (8) de la première boîte de vitesses partielle (6) et l'arbre d'entrée (9) de la deuxième boîte de vitesses partielle (7) et dès lors une égalité forcée du nombre de tours entre eux, et qu'au contraire, lorsque l'élément de commutation de pontage (12) est ouvert, cette liaison solidaire en rotation entre la machine électrique (2) et les deux arbres d'entrée (8, 9) des deux boîtes de vitesses partielles (6, 7) et dès lors l'égalité du nombre de tours n'existe pas, dans lequel l'embrayage de séparation (11) est réalisé sous forme d'embrayage de séparation par friction ou par emboîtement, et dans lequel l'élément de commutation de pontage (12) est réalisé sous forme d'élément de commutation de pontage à friction (12), **caractérisé en ce que** pour l'exécution d'une commutation en charge en marche purement électrique de l'unité d'entraînement l'élément de commutation de pontage à friction (12) est utilisé comme élément de commutation en charge, à savoir lors de l'exécution d'une commutation montante en mode traction et lors de l'exécution d'une commutation descendante en mode propulsion comme élément de commutation en charge se fermant ou à fermer et lors de l'exécution d'une commutation descendante en mode traction et lors de l'exécution d'une commutation montante en mode propulsion comme élément de commutation en charge s'ouvrant ou à ouvrir.

2. Procédé selon la revendication 1, **caractérisé en ce que** pour l'exécution d'une commutation montante en mode traction ou d'une commutation descendante en mode propulsion, en marche purement électrique, lorsque l'élément de commutation de pontage à friction (12) et l'embrayage de séparation (11) sont tous les deux ouverts, et lorsqu'une vitesse est engagée dans les deux boîtes de vitesses partielles (6, 7),
on exécute d'abord une reprise de charge par l'élément de commutation de pontage à friction (12) pour décharger la première boîte de vitesses (6),
on dégage ensuite la vitesse dans la première boîte de vitesses (6), et
on synchronise ensuite l'élément de commutation de pontage à friction (12) par une adaptation du nombre de tours,
puis on ferme l'élément de commutation de pontage à friction (12).

3. Procédé selon la revendication 1, **caractérisé en ce que** pour l'exécution d'une commutation descendante en mode traction ou d'une commutation montante en mode propulsion en marche purement électrique, lorsque l'élément de commutation de pontage à friction (12) est fermé, lorsque l'embrayage de séparation (11) est ouvert, lorsqu'une vitesse est engagée dans la deuxième boîte de vitesses partielle (7) et lorsque la première boîte de vitesses (6) est au point mort,
on abaisse d'abord la capacité de transmission de l'élément de commutation de pontage à friction (12) et on amène ainsi celui-ci en mode patinage,
dans lequel on synchronise ensuite la première boîte de vitesses partielle (6) par une adaptation du nombre de tours à la machine électrique (2) sur le rapport visé de la commutation en charge à exécuter,
puis on engage le rapport visé dans la première boîte de vitesses partielle (6), et
on ouvre ensuite l'élément de commutation de pontage à friction (12).

4. Procédé selon la revendication 1, **caractérisé en ce que** pour coupler le moteur à combustion interne (1) au moyen d'un embrayage de séparation par emboîtement (11) à l'aide de l'élément de commutation de pontage à friction (12), on synchronise le nombre de tours de l'arbre d'entrée (8) de la première boîte de vitesses partielle (6) avec le nombre de tours du moteur à combustion interne (1) pour obtenir la force de traction à la sortie (4).

5. Procédé selon la revendication 4, **caractérisé en ce que** pour coupler le moteur à combustion interne (1) en marche purement électrique, lorsque l'élément de commutation de pontage à friction (12) est fermé, lorsque l'embrayage de séparation (11) est ouvert, lorsqu'une vitesse est engagée dans la deuxième boîte de vitesses partielle (7) et lorsque la première boîte de vitesses partielle (6) est au point mort,
on abaisse d'abord la capacité de transmission de l'élément de commutation de pontage à friction (12) et on amène ainsi celui-ci en mode patinage;
dans lequel on synchronise en outre l'embrayage de séparation par emboîtement (11) avec la machine électrique (2) par une adaptation du nombre de tours;
puis on ferme l'embrayage de séparation par emboîtement (11);
on décharge ensuite l'élément de commutation de pontage à friction (12) par une reprise de charge du moteur à combustion interne (1);
puis on synchronise la première boîte de vitesses partielle (6) avec la vitesse appropriée et on engage cette vitesse dans la première boîte de vitesses partielle (6);
on décharge ensuite la machine électrique (2) par une autre reprise de charge du moteur à combustion interne (1) .
